# EUROPEAN PATENT APPLICATION

(11) **EP 1 484 501 A1**
(43) Date of publication of application: **08.12.2004**
(21) Application number: 03012612.2
(22) Date of filing: 03.06.2003
(51) Int. Cl.: F03D 1/04, F03D 9/00

(54) **Solar chimney with updraught turbine**

(71) Applicant: Yeh, Chao-Chin, Changhua County, Taiwan 520 (TW)
(72) Inventor: Yeh, Chao-Chin, Changhua County, Taiwan 520 (TW)
(74) Representative: Becker Kurig Straus

(57) **Abstract**

A solar power generating apparatus has a transparent isolating layer made into a hollow cone having a smaller top and a larger bottom. The isolating layer has a hole at the top thereof and a space therein. A heat absorption layer is provided at an inner side of the isolating layer to absorb heat of the sunlight and to heat air in the space of the isolating layer. A rotary device is pivoted on the isolating layer at where adjacent to the hole. The heated air generates an upward airflow in the space of the isolating layer to drive the rotary device for rotation.

## Description

### BACKGROUND OF THE INVENTION

### 1. Field of the Invention

The present invention relates generally to a power generator, and more particularly to a solar power generating apparatus.

### 2. Description of the Related Art

In modem life, people more and more depend on electric power for everyday work. Specialists who work on finding a power supply with more efficiency and less pollution still are trying their best to find a new way of power generating. Solar power is a better Way of generating electric power which the noise is less and the pollution is less.

### SUMMARY OF THE INVENTION

The primary objective of the present invention is to provide a solar power generating apparatus, which has a simpler structure, lower cost and less noise and pollution.

According to the objective of the present invention, a solar power generating apparatus comprises a transparent isolating layer made into a hollow cone having a smaller top and a larger bottom, wherein the isolating layer has a hole at the top thereof and a space therein where the space is isolated from outside by the isolating layer, a heat absorption layer provided at an inner side of the isolating layer to absorb heat of the sunlight and to heat air in the space of the isolating layer, and a rotary device pivoted on the isolating layer at where adjacent to the hole, wherein the heated air generates an upward airflow to drive the rotary device for rotation.

### BRIEF DESCRIPTION OF THE DRAWINGS

FIG. 1 is a perspective view of a preferred embodiment of the present invention, and
FIG. 2 is a sectional view along the 2-2 line in FIG. 1.

### DETAILED DESCRIPTION OF THE INVENTION

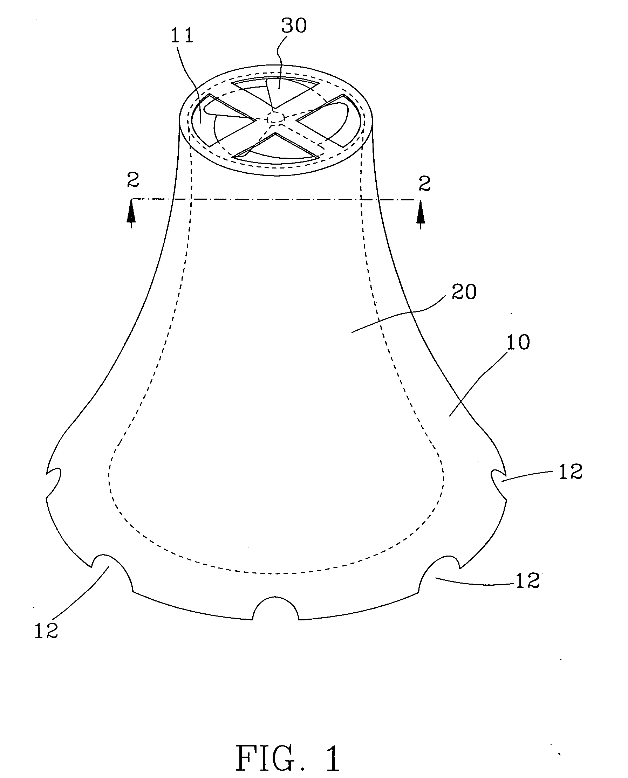

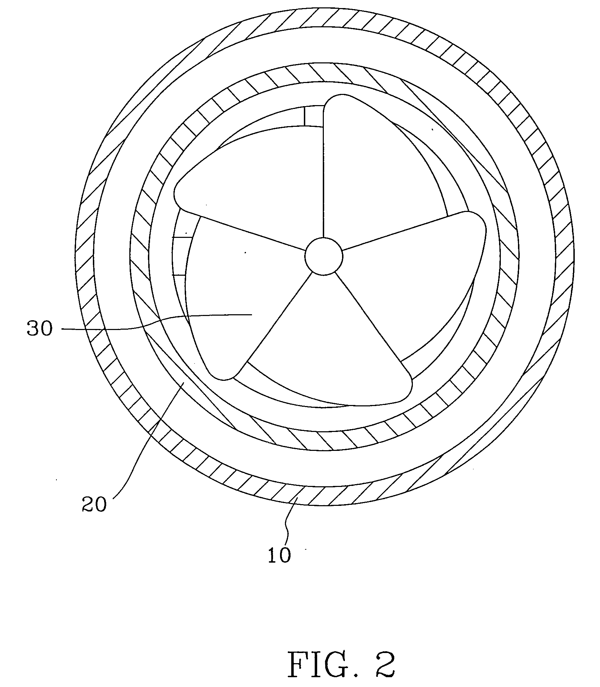

As shown in FIG. 1 and FIG. 2, a solar power generating apparatus of the preferred embodiment of the present invention comprises:

A transparent isolating layer 10 is made into a hollow cone having a smaller top and a larger bottom. The isolating layer 10 has a hole 11 at the top thereof and plural of inlets 12 at the bottom thereof. The isolating layer 10 has a space therein where the space is isolated from outside by the isolating layer 10.

A heat absorption layer 20 is provided on a inner side of the isolating layer 10 for absorption the heat of solar power. The heat absorption layer 20 can be made of a dark metal plate or dark paint coated on the inner side of the isolating layer 10. The heat absorption layer 20 has a shape similar to the isolating layer 10 but is smaller in size. The heat absorption layer 20 has openings at a top and a bottom thereof to facilitate air flowing through.

A rotary device 30 is pivoted on the isolating layer 10 behind the hole 11. The rotary device 30 is driven for rotation while air flowing through and the rotation of the rotary device 30 generates mechanical energy. The rotary device 30 is a turbine in the present invention and the turbine is connected to a power generating set (not shown) to generate electricity.

In use, the solar power generating apparatus of the present invention is put at a suitable place where the sunlight illuminates the solar power generating apparatus directly, such as a rooftop, an opened land or a desert area. The heat absorption layer 20 absorbs and stores the thermal energy while the sunlight illuminates the solar power generating apparatus. The air in the space of the isolating layer 10 is heated and the temperature is very high. It is similar to the situation that the temperature is very high in a truck while the truck had been parked under the sunlight for a long time. Free convection is occurred in the space of the isolating layer 10 now where the heated air in the space flows upwards and out of the isolating layer 10 via the hole 11 and cold air will be sucked into the space of the isolating layer 10 via the inlets 12. The airflow flows upwards and along a sidewall of the space of the isolating layer 10 to drive the turbine 30 for rotation so that the turbine 30 can drive the power generating set working to generate electricity. The convection is occurred in the space of the isolating layer 10 continuously while the heat absorption layer 20 is heated by sunlight and there always is cold air flowed into the isolating layer 10 via the inlets 12 and upwards airflow flowed out of the isolating layer 10 via the hole 11 to drive the turbine 30. With the description above, it is easy to understand that the solar power generating apparatus of the present invention has a simpler structure and less noise and pollution in generating power. It can be a power supply for lower loading such as driving ventilation system to lower the indoor temperature.

## Claims

1. A solar power generating apparatus, comprising:
transparent isolating layer made into a hollow cone having a smaller top and a larger bottom, wherein the isolating layer has a hole at the top thereof and a space therein where the space is isolated from outside by the isolating layer;
a heat absorption layer provided at an inner side of the isolating layer to absorb heat of the sunlight and to heat air in the space of the isolating layer, and
a rotary device pivoted on the isolating layer at where adjacent to the hole;
wherein the heated air generates an upward airflow in the space of the isolating layer to drive the rotary device for rotation.

2. The solar power generating apparatus as defined in claim 1, wherein the heat absorption layer is made of a metal plate.

3. The solar power generating apparatus as defined in claim 1, wherein the heat absorption layer is made of a dark paint coated on the isolating layer.

4. The solar power generating apparatus as defined in claim 1, wherein the rotary device is a turbine.
